# EUROPÄISCHE PATENTSCHRIFT

(11) **EP 0 953 375 B1**
(45) Veröffentlichungstag und Bekanntmachung des Hinweises auf die Patenterteilung: **21.09.2005**
(21) Anmeldenummer: 99108398.1
(22) Anmeldetag: 29.04.1999
(51) Int. Cl.: B01D 53/94, B01D 53/32, F01N 3/08

(54) **Verfahren zur Verminderung des Stickoxidgehaltes der Abgase eines Verbrennungsmotors**
Process for decreasing the nitrogen oxide content in combustion engine exhaust gases
Procédé pour dimineur le taux d'oxydes d'azote dans des gaz d'échappement d'un moteur à combustion

(30) Priorität: 30.04.1998 DE 19819372
(43) Veröffentlichungstag der Anmeldung: 03.11.1999
(73) Patentinhaber: Umicore AG & Co. KG, 63457 Hanau-Wolfgang (DE)
(72) Erfinder: Lox, Egbert Dr., 63457 Hanau (DE); Gieshoff, Jürgen Dr., 63599 Biebergemünd (DE); Strehlau, Wolfgang Dr., 63538 Grosskrotzenburg (DE); Kreuzer, Thomas Dr., 61184 Karben (DE)
(74) Vertreter: Stellbrink, Axel

(56) Entgegenhaltungen:
- WO-A-98/02233
- DE-A- 2 227 949
- DE-A- 19 826 831
- US-A- 5 711 147
- PATENT ABSTRACTS OF JAPAN vol. 018, no. 680 (C-1291), 21. Dezember 1994 (1994-12-21) & JP 06 269635 A (MITSUBISHI HEAVY IND LTD), 27. September 1994 (1994-09-27)

## Beschreibung

Die vorliegende Erfindung betrifft ein Verfahren zur Verminderung des Stickoxidgehaltes der Abgase eines Verbrennungsmotors durch Speichern der Stickoxide an einem Speicherkatalysator während Betriebsphasen des Motors mit überstöchiometrischem Luft/Kraftstoffverhältnis in Form von Nitraten, Zersetzen der Nitrate zu Stickoxiden während Betriebsphasen des Motors mit unterstöchiometrischem Luft/Kraftstoffverhältnis und Reduktion der freigesetzten Stickoxide.

Gattungsgemäße Verfahren werden zur Reinigung der Abgase von Verbrennungsmotoren eingesetzt, die überwiegend mit einem überstöchiometrischen Luft/Kraftstoffverhältnis betrieben werden. Es handelt sich um Dieselmotoren und mager betriebene Otto-Motoren, insbesondere Otto-Motoren mit Benzin-Direkteinspritzung.

Das Luft/Kraftstoffverhältnis für die stöchiometrische Verbrennung hängt von der Zusammensetzung des Kraftstoffes ab. Übliche Motorkraftstoffe haben ein stöchiometrisches Luft/Kraftstoffverhältnis von etwa 14,6, das heißt es werden 14,6 Kilogramm Luft für die vollständige Verbrennung eines Kilogramms Kraftstoff benötigt. Die genannten Verbrennungsmotoren werden während der überwiegenden Dauer ihres Betriebes mit Luft/Kraftstoffverhältnissen von über 16 betrieben. Zur Beschreibung der Zusammensetzung des Abgases wird häufig statt des Luft/Kraftstoffverhältnisses die sogenannte Luftzahl λ verwendet. Hierbei handelt es sich um das auf stöchiometrische Verhältnisse normierte Luft/Kraftstoff-Verhältnis. Ein stöchiometrisch zusammengesetztes Abgas hat daher die Luftzahl 1. Unterhalb von 1 liegen fette und oberhalb von 1 magere Abgaszusammensetzungen vor.

Die Schadstoffe im Abgas dieser Motoren bestehen im wesentlichen aus Kohlenmonoxid, unverbrannten Kohlenwasserstoffen und Stickoxiden. Die Stickoxide bestehen überwiegend aus Stickstoffmonoxid und Stickstoffdioxid, wobei Stickstoffmonoxid - je nach Motorbetriebspunkt - den Hauptanteil von etwa 90 Vol.-% ausmacht. Wegen des überstöchiometrischen Betriebs enthält das Abgas einen hohen Sauerstoffanteil von in der Regel mehr als 6 Vol.-%. Außerdem enthält das Abgas noch ca. 10 bis 15 Vol.-% Wasser.

Die oxidierbaren Bestandteile des Abgases (Kohlenmonoxid und Kohlenwasserstoffe) lassen sich wegen des hohen Sauerstoffgehaltes relativ leicht mit sogenannten Oxidationskatalysatoren zu unschädlichem Wasser und Kohlendioxid umsetzen. Dagegen bereitet die Reduktion der Stickoxide wegen des hohen Sauerstoffgehaltes und der geringen Selektivität der Reaktion der Stickoxide mit als Reduktionsmittel wirkenden Kohlenwasserstoffen und Kohlenmonoxid große Schwierigkeiten.

Eine Möglichkeit, die Stickoxide im sauerstoffreichen Abgas zu unschädlichem Stickstoff umzusetzen, besteht in der Anwendung des eingangs angeführten Verfahrens. Wesentliche Komponente des Verfahrens ist ein Stickoxid-Speicherkatalysator, oder kurz Speicherkatalysator. Er besteht hauptsächlich aus einem basischen Speichermaterial, zumeist Alkali- oder Erdalkalimetalloxide, und einem katalytisch aktiven Edelmetall der Platingruppenmetalle (Ruthenium, Rhodium, Palladium, Osmium, Iridium und Platin). Bevorzugt wird Platin verwendet, welches von allen Edelmetallen die höchste Aktivität für die Bildung von NO₂ besitzt.

Während des überstöchiometrischen Betriebs des Verbrennungsmotors wird das im Abgas enthaltene Stickstoffmonoxid durch das Edelmetall des Katalysators zu Stickstoffdioxid oxidiert, welches vom basischen Speichermaterial in Form von Nitraten gespeichert wird. Mit zunehmender Zeit sinkt die Geschwindigkeit der Stickoxid-Aufnahme aufgrund der Absättigung des Speichermaterials, so daß eine Regeneration eingeleitet werden muß. Hierzu wird von der Motorelektronik kurzzeitig auf unterstöchiometrischen Betrieb des Motors umgeschaltet (Anfetten des Kraftstoff/Luft-Gemisches) und eine netto-reduzierende Gasatmosphäre über dem Stickoxid-Speicherkatalysator erzeugt. Dabei werden die Nitrate zu Stickstoffoxiden zersetzt, welche an der Edelmetallkomponente des Katalysators mit Hilfe von im Abgas jetzt im Überschuß vorhandenen Kohlenmonoxid, Kohlenwasserstoffen und Wasserstoff zu unschädlichem Stickstoff umgesetzt werden. Geeignete Speicherkatalysatoren werden zum Beispiel in der EP 0 562 516 A1 beschrieben. Als Speichermaterial wird in dieser Patentanmeldung ein Mischoxid aus Bariumoxid und Lanthanoxid verwendet. Die katalytisch aktive Komponente ist in diesem Fall Platin.

Neben der beschriebenen Technik der Speicherkatalysatoren wurden in den letzten Jahren plasmaunterstützte Reinigungsverfahren entwickelt. So beschreibt die EP 0 659 465 A2 ein Verfahren zum Reinigen der Abgase, bei dem das Gas einer elektrischen Gasentladung unterworfen und dem Kontakt mit katalytischem Material ausgesetzt wird. Bevorzugt findet die Gasentladung in einem Bereich statt, der katalytisches Material enthält.

Die DE 22 27 949 A beschreibt ein Verfahren zum Zersetzen von Stickstoffoxiden in Abgasen eines Verbrennungsmotors bei dem die Abgase in einer elektrischen Entladung behandelt werden. Während der plasmachemischen Umwandlung der Abgaskomponente findet eine Adsorption von Stickstoffoxiden an einem Feststoff und eine Desorption von Stickstoff und Sauerstoff von diesem Feststoff statt.

Die EP 0 736 320 A1 beschreibt ein Verfahren zur kontinuierlichen Entfernung von Stickoxiden in Abgasen von Verbrennungsmaschinen mit Sauerstoffüberschuß, wobei ein reaktiver, stickstoffhaltiger Plasma-Jet in den Abgasstrom eingespeist wird. Der Plasma-Jet wird durch elektromagnetische Hochfrequenzfelder erzeugt.

Ein weiteres Verfahren zur Behandlung von Abgas mit Hilfe elektrischer Entladungen beschreibt die WO 96/37690. Hierbei durchströmt das Abgas einen Entladungsraum mit einem elektrischen Feld, in dem dielektrische Entladungen (Barriereentladungen) erzeugt werden.

Die WO 97/03746 offenbart ein Verfahren zur plasmachemischen Zersetzung und/oder Vernichtung von Schadstoffen, wobei die Schadstoffe als Abgasstrom eine mit dielektrisch behinderten ("stillen") Entladungen beaufschlagte Strecke in einem Reaktorvolumen durchlaufen. Die Entladung wird in einer räumlichen Struktur betrieben, bei der das gesamte Reaktorvolumen in axialer Richtung in Entladungszonen und entladungsfreie Zonen unterteilt ist, wobei in den Entladungszonen lokale Feldüberhöhungen vorliegen, die zu einer Erhöhung der bei der Entladung wirksamen Elektronenenergie führen.

Die DE 195 10 804 A1 beschreibt ein Verfahren zur Stickoxidminderung in Abgasen von Verbrennungsmaschinen mit Sauerstoffüberschuß, wobei die Abgase unter Zuführung eines selektiv wirkenden gasförmigen Reduktionsmittels mit einem Katalysator in Kontakt gebracht werden. Dabei wird das Reduktionsmittel vor Eintritt in den Kontakt am Katalysator in den Hochdruckplasmazustand unter überwiegender Radikalbildung überführt, so daß eine Beschleunigung der Reaktion erzielt wird.

Die WO 98/00221 beschreibt eine Abgasreinigungsanlage aus einem Speicher für Stickoxid-, Kohlenwasserstoff- und Partikelemissionen eines Verbrennungsprozesses und einem Plasmareaktor zur Zersetzung der gespeicherten Emissionen. Der Speicher kann vollständig vor, mit dem Plasmareaktor überlappend oder auch vollständig im Plasmareaktor angeordnet sein. Die genannten Schadstoffemissionen werden während einer gewissen Zeit gesammelt und dann im Plasmareaktor zerstört. Der Plasmareaktor wird nur während der Freisetzungsphase der Schadstoffe betrieben, um die Bildung von unerwünschtem Stickstoffdioxid und Salpetersäure zu vermeiden und den mit dem Betrieb des Plasmareaktors verbundenen Energieverbrauch zu minimieren.

Die beschriebenen Verfahren zur Abgasreinigung weisen zum Teil erhebliche Probleme und Mängel auf. So bereitet im Falle des Speicherkatalysators die Oberflächenstabilität des verwendeten Platins nach Hochtemperaturalterung insbesondere im mageren Abgas Probleme. Zudem beginnt die Oxidation des Stickstoffmonoxids zu Stickstoffdioxid erst im Temperaturbereich zwischen 150 und 200°C und verschiebt sich nach thermischer Alterung des Katalysators zu höheren Temperaturen. Eine erfolgversprechende Umsetzung der Stickoxide mit Hilfe eines Speicherkatalysators ist bei Dieselfahrzeugen mit den im städtischen Betrieb auftretenden niedrigen Abgastemperaturen nur im geringen Maße möglich.

Die besprochenen Reinigungsverfahren unter Verwendung von elektrischen Gasentladungen führten bisher ebenfalls nicht zum erwünschten Erfolg. Messungen der Auswirkungen einer elektrischen Gasentladung auf die oxidierten Stickstoffkomponenten in einem Stickoxid enthaltenden mageren Abgas zeigten nämlich, daß durch die Entladung zwar der hohe Anteil von Stickstoffmonoxid bis nahezu auf Null vermindert werden kann, es bilden sich jedoch höher oxidierte Stickstoffkomponenten wie Stickstoffdioxid und durch Reaktion mit dem Wassergehalt des Abgases auch Salpetersäure. Eine Netto-Verminderung der oxidierten Stickstoffkomponenten konnte also nicht beobachtet werden.

Aufgabe der vorliegenden Erfindung ist es, ein Verfahren zur Verminderung des Stickoxidgehaltes in Abgasen von Verbrennungsmotoren unter Verwendung eines Stickoxidspeicherkatalysators anzugeben, welches eine erhöhte Alterungsstabilität aufweist, die Verwendung von Platin weitgehend überflüssig macht oder es erlaubt, Platin durch eine andere Aktivkomponente wie Palladium, Kupfer, Mangan oder andere zu ersetzen. Außerdem soll es sich durch eine verbesserte Tieftemperaturaktivität auch unter 150°C auszeichnen.

Diese Aufgabe wird gelöst durch ein Verfahren zur Verminderung des Stickoxidgehaltes der Abgase eines Verbrennungsmotors durch Speichern der Stickoxide an einem Stickoxidspeichermaterial während Betriebsphasen des Motors mit überstöchiometrischem Luft/Kraftstoffverhältnis in Form von Nitraten (Speicherphase), Zersetzen der Nitrate zu Stickoxiden während kurzzeitiger Betriebshasen mit unterstöchiometrischem Luft/Kraftstoffverhältnis (Desorptionsphase) und Reduktion der freigesetzten Stickoxide. Das Verfahren ist dadurch gekennzeichnet, daß die Abgase zumindest während der Speicherphase in einer elektrischen Gasentladung behandelt und das gebildete Stickstoffdioxid und die gebildete Salpetersäure am Stickoxidspeichermaterial gespeichert werden.

Als Speichermaterial für die Stickoxide werden basische Materialien gewählt, die die Stickoxide in Form von Nitraten binden. Im Gegensatz zum konventionellen Einsatz von Speicherkatalysatoren, bei dem Platin die wichtige Aufgabe der Bildung von Stickstoffdioxid übernimmt, kommt das erfindungsgemäße Verfahren während der Speicherphase (oxidierende Abgasbedingungen) prinzipiell ganz ohne Edelmetallkomponenten aus. Die Bildung von Stickstoffdioxid übernimmt die elektrische Gasentladung. Von besonderer Bedeutung ist auch die Bildung von Salpetersäure, die beim konventionellen Verfahren nicht beobachtet wird. Die Umsetzungsrate von Salpetersäure mit dem basischen Speichermaterial zu Nitraten ist höher als die Umsetzungsrate von Stickstoffdioxid. Es ergibt sich also eine Effizienzsteigerung bei der Speicherung von oxidierten Stickstoffkomponenten in Form von Nitraten.

Außerdem erfolgt die Bildung von Stickstoffdioxid und Salpetersäure in der elektrischen Gasentladung schon im Tieftemperaturbereich unter 150°C, so daß also auch schon während des Kaltstarts die Abspeicherung der Stickoxide beginnt.

Die Erfindung wird nun an Hand der Figuren 1 bis 10 näher erläutert. Es zeigen:
- **Figur 1****:**: Dielektrische Barriereentladung mit parallelen, flächigen Elektroden; einseitig dielektrisch behinderte Entladung
- **Figur 2:**: Dielektrische Barriereentladung mit parallelen, flächigen Elektroden; beidseitig dielektrisch behinderte Entladung
- **Figur 3:**: Dielektrische Barriereentladung mit parallelen, flächigen Elektroden; beidseitig dielektrisch behindert; mit Pellets gefüllter Entladungsraum
- **Figur 4-6:**: Verschiedene Anordnung des Plasmareaktors im Abgasreinigungssystem des Verbrennungsmotors
- **Figur 7:**: Plasmareaktor in Form eines Wabenkörpers in einem Konvertergehäuse mit axial geführter Entladung
- **Figur 8:**: Plasmareaktor in Form eines metallischen Wabenkörpers mit transversal geführter Entladung
- **Figur 9:**: Koaxialer Reaktor mit Pelletfüllung
- **Figur 10:**: Absorptionsspektren einer unbhandelten Synthesegasmischung (Figur 10a), einer über Bariumoxidpellets geleiteten Synthesegasmischung (Figur 10b) und einer Synthesegasmischung nach Leiten über Bariumoxidpellets bei gleichzeitig eingeschalteter Gasentladung

Es können unterschiedliche Gasentladungen zur Behandlung der Abgase eingesetzt werden. Für die Zwecke der Erfindung besonders geeignet sind die sogenannten dielektrischen Barriereentladungen.

Eine Barriereentladung kann zwischen zwei metallischen Elektroden erzeugt werden, von denen wenigstens eine mit einem Dielektrikum belegt ist, die einen direkten Entladungsstrom zwischen den beiden metallischen Elektroden verhindert.

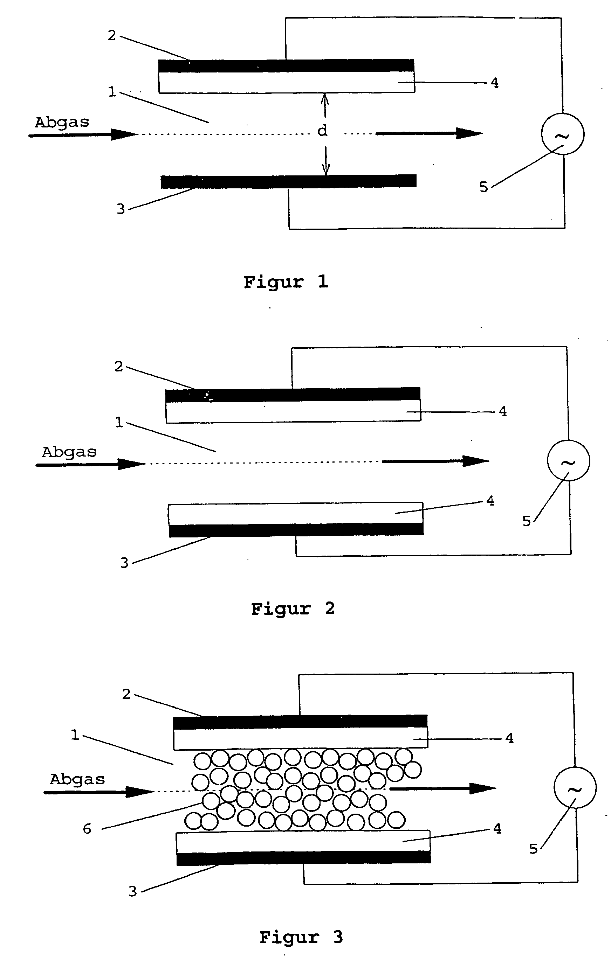

Figur 1 zeigt den prinzipiellen Aufbau einer solchen Entladung. (2) und (3) bezeichnen die beiden metallischen Elektroden, die sich gegenüberstehen und mit einer Wechselspannungsquelle (5) verbunden sind. Zur Unterbindung eines direkten Entladungsstromes zwischen den beiden Elektroden ist Elektrode (2) mit einem Dielektrikum (4) belegt. Eine solche Entladung wird als einseitig dielektrisch behindert bezeichnet.

Durch Anlegen einer Wechselspannung an die beiden Elektroden kommt es bei ausreichender Spannung zu der gewünschten Entladung. Die benötigte Spannung hängt von dem freien Abstand d zwischen Dielektrikum und Gegenelektrode sowie vom Druck in der Entladungsstrecke ab. Der Abstand d wird bevorzugt zwischen 0,5 und 10 mm eingestellt. Die benötigten Spannungen liegen dann etwa zwischen 5 und 15 kV. Die Frequenz der Wechselspannung kann zwischen 50 Hz und 250 kHz gewählt werden.

Figur 2 zeigt eine Abwandlung der Anordnung von Figur 1. In Figur 2 sind beide Elektroden mit einem Dielektrikum belegt. Die sich im Entladungsraum ausbildende Gasentladung wird deshalb als beidseitig dielektrisch behindert bezeichnet. Gemäß Figur 3 kann der Entladungsraum mit Füllkörpern (6) gefüllt sein, die jedoch auf den Abgasstrom keinen zu großen Strömungswiderstand ausüben dürfen. Die Füllung der Entladungsstrecke hat zur Folge, daß die Entladung im wesentlichen über die Oberfläche der Füllkörper läuft. Dadurch kann eine höhere Leistung in die Entladung eingekoppelt werden, was zu einem verbesserten Umsatz der Stickoxide zu Stickstoffdioxid und Salpetersäure führt. Bei den Füllkörpern beziehungsweise Pellets kann es sich um kugelförmige Agglomerate oder auch um zylindrische oder ringförmige Extrudate handeln. Prinzipiell sind alle aus der Technik der Festbett-Katalysatoren bekannten Formen der Pellets geeignet. Bevorzugt sind solche Formen, die bei möglichst hoher geometrischer Oberfläche als Schüttung einen möglichst geringen Strömungswiderstand für das Abgas aufweisen.

Die Elektroden können als parallel zueinander ausgerichtete flächige Gebilde aufgebaut sein oder eine koaxiale Anordnung mit einer Mittenelektrode, die von einer Rohrelektrode umgeben ist, bilden. Zur Erleichterung der Ausbildung von Entladungsfäden können räumliche Inhomogenitäten vorgesehen sein, die zu lokalen Feldüberhöhungen und damit zur Ausbildung der Entladung führen.

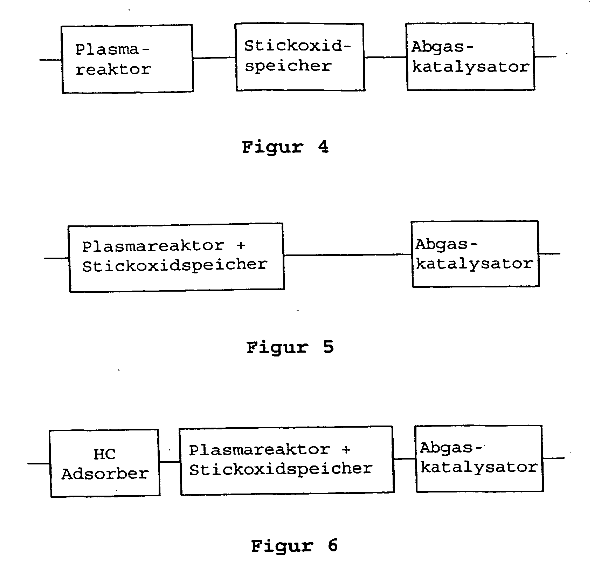

Die Figuren 4 bis 6 zeigen verschiedene Anordnungen der Entladungsstrecke (im folgenden auch als Plasmareaktor bezeichnet) in der Abgasreinigungsanlage des Verbrennungsmotors. Gemäß Figur 4 ist der Plasmareaktor vor dem Stickoxidspeicher angeordnet. Das im Plasmareaktor unter mageren Abgasbedingungen gebildete Stickstoffdioxid und die Salpetersäure werden über den Stickoxidspeicher geleitet und reagieren mit seinem Speichermaterial zu Nitraten (Speicherphase).

Hat der Speicher seine Speicherkapazität erreicht, so muß er regeneriert werden. Dies geschieht durch Absenken der Luftzahl λ des Abgases auf Werte unter 1. Dadurch werden die gespeicherten Nitrate zersetzt und verlassen den Stickoxidspeicher (Desorptionsphase). Zur Umsetzung der Stickoxide mit den reduktiven Komponenten des angefetteten Abgases ist hinter dem Stickoxidspeicher ein Abgaskatalysator in die Abgasanlage eingebaut.

Die Barriereentladung kann auch während der Desorptionsphase weiterlaufen. Es besteht jedoch die Möglichkeit, die Barriereentladung während dieser Phase zu unterbrechen, da die gesamte Abgasreinigung vom nachgeschalteten Abgaskatalysator übernommen wird.

Die in Figur 4 dargestellte Anordnung kann dahingehend abgeändert werden, daß das Stickoxidspeichermaterial selbst mit wenigstens einem Metall aus der Platingruppe oder aus der ersten Reihe der Übergangsmetalle (Elemente mit den Ordnungszahlen 21 bis 30) des periodischen Systems der Elemente als katalytisch aktive Komponenten ausgerüstet wird. In diesem Fall weist das Stickoxidspeichermaterial auch katalytische Fähigkeiten auf. Während der Speicherphase unterstützt es die Funktion des Plasmareaktors durch Oxidation von Stickstoffmonoxid, welches den Plasmareaktor unter Umständen unverändert verlassen hat, zu Stickstoffdioxid und Abspeicherung als Nitrat. Während der Desorptionsphase kann es die Umsetzung der desorbierten Stickoxide mit den reduktiven Komponenten des Abgases katalysieren, so daß je nach Dimensionierung der Abgasanlage gegebenenfalls auf den nachgeschalteten Abgaskatalysator in Figur 4 verzichtet werden kann.

Gemäß Figur 5 kann das Stickoxidspeichermaterial auch im Entladungsraum des Plasmareaktors untergebracht werden. Dadurch ist es wie im Falle der inerten Füllkörper möglich, eine höhere Energiedichte in die Entladung einzukoppeln. Das in der Gasentladung gebildete Stickstoffdioxid und die Salpetersäure werden direkt nach der Bildung am Speicherkatalysator in Nitrate überführt und abgespeichert. Dem Stickoxidspeichermaterial ist wieder ein Abgaskatalysator zur Umsetzung der Stickoxide während der Desorptionsphase nachgeschaltet.

Zusätzlich oder alternativ zum Abgaskatalysator kann auch in diesem Fall das Speichermaterial mit katalytisch aktiven Komponenten aus der Platingruppe und aus der ersten Reihe der Übergangsmetalle des periodischen Systems der Elemente versehen sein, die einerseits die Wirkung des Plasmas während der Speicherphase unterstützen und andererseits während der Desorptionsphase die freigesetzten Stickoxide reduzieren. Insbesondere ist es möglich, den Stickoxid-Speicherkatalysator als Kombination eines konventionellen Abgaskatalysators mit den Speicherkomponenten auszubilden. Durch die Plasmaunterstützung kann die Beladung des Speicherkatalysators mit den katalytisch aktiven Edelmetallen verringert werden.

Zur Verbesserung der Abgasreinigung können dem Plasmareaktor ein Startkatalysator und/oder ein Kohlenwasserstoffadsorber vorangestellt werden (siehe Figur 6). Hierdurch werden das Anspringverhalten der Abgasreinigung positiv beeinflußt und Kohlenwasserstoffemissionen während der Kaltstartphase unterdrückt.

Wird der Speicherkatalysator in Form von Pellets in den Entladungsraum eingefüllt, so ist ein großer Teil des Speichermaterials im Innern der Pellets für die Stickoxidkomponenten nur schwer zugänglich und wird nur unzureichend genutzt. Eine Verbesserung dieser Situation kann erzielt werden, wenn das Speichermaterial auf die Innenwände der Strömungskanäle eines inerten Tragkörpers in Wabenform als Beschichtung aufgebracht wird.

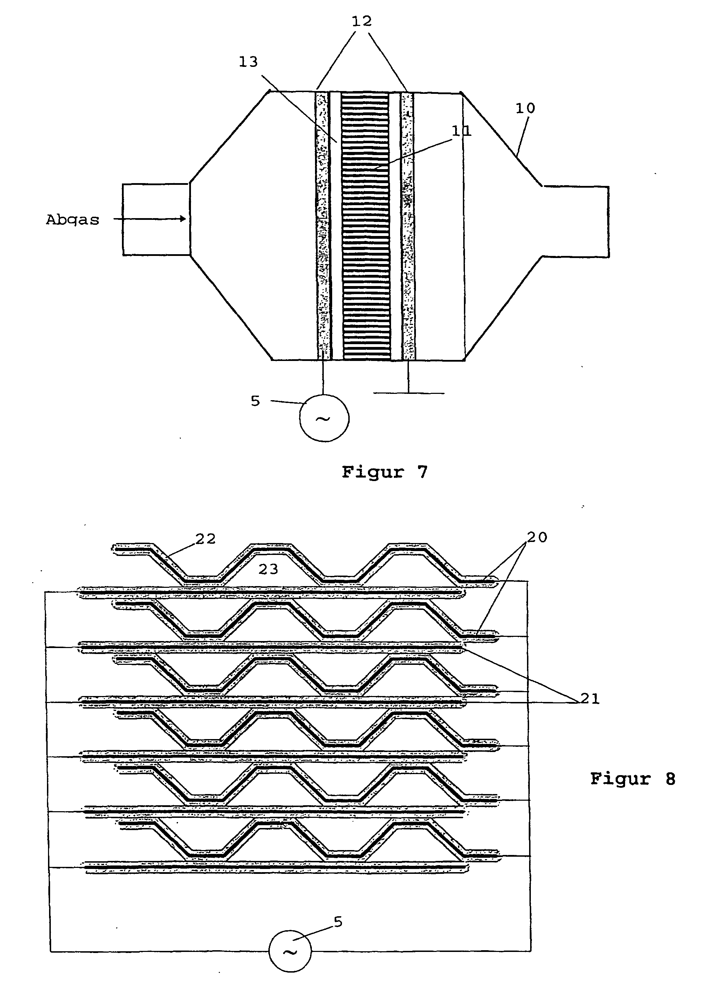

Figur 7 zeigt eine solche Anordnung. Der Wabenkörper 11 ist im einem Konvertergehäuse 10 eingebaut. Wie bei konventionellen Abgaskatalysatoren strömt das Abgas durch die Strömungskanäle des Wabenkörpers. Die elektrische Gasentladung wird ebenfalls durch die Strömungskanäle hindurchgeführt. Zu diesem Zweck sind die Stirnflächen des Wabenkörpers mit perforierten, dielektrisch beschichteten Entladungselektroden (12) versehen. (13) bezeichnet die dielektrische Beschichtung. Eine Möglichkeit, solche Elektroden auf die Stirnflächen aufzubringen besteht zum Beispiel darin, die Stirnflächen durch Kathodenzerstäubung mit geeigneten Schichten zu belegen. Durch die axiale Führung der Gasentladung durch die Strömungskanäle können nur Wabenkörper mit Längen von etwa 1 cm und darunter sinnvoll verwendet werden. Längere Wabenkörper würden zu hohe Entladungsspannungen erfordern.

Diese Beschränkung besitzt der Wabenkörper von Figur 8 nicht. Figur 8 zeigt einen Querschnitt durch den Wabenkörper senkrecht zu den Strömungskanälen 23 für das Abgas. Der Wabenkörper besteht abwechselnd aus Lagen von glatten (21) und gewellten (20) Metallfolien, die beidseitig mit dem Stickoxidspeichermaterial (22) beschichtet sind. Die glatten Folien sind über eine gemeinsame elektrische Leitung mit einem Pol der Hochspannungsquelle (5) und die gewellten Folien mit dem zweiten Pol der Spannungsquelle verbunden. Durch Anlegen einer Spannung findet eine elektrische Entladung in jedem Strömungskanal 23 transversal zur Strömung des Abgases statt. Die Beschichtung der Metallfolien mit dem Stickoxidspeichermaterial wirkt als Dielektrikum und übernimmt gleichzeitig die elektrische Isolierung zweier benachbarter Metallfolien.

Wegen der geringen Querschnittsabmessungen der Strömungskanäle kann die Entladungsspannung entsprechend niedrig gewählt werden. Insbesondere ist die Länge der Wabenkörper nicht wie bei der Ausführungsform nach Figur 7 beschränkt. In Figur 8 sind gewellte und glatte Metallfolien miteinander kombiniert und bilden einen Folienstapel. Es können jedoch auch zwei verschiedenartig gewellte Metallfolien miteinander kombiniert werden. Die Art der Wellung, ebenso wie die Querschnittsabmessungen der Strömungskanäle können den Anwendungserfordernissen angepaßt werden.

Falls die Beschichtung aus dem Speichermaterial auf den Metallfolien nicht in der Lage ist, die Funktion einer dielektrischen Barriere zu übernehmen, besteht die Möglichkeit, eine dielektrische Zwischenschicht zwischen dem Träger und der Speicherschicht einzubringen. Alternativ kann auch die glatte Metallfolie durch eine dielektrisch wirkende Barriere zum Beispiel in Form einer keramischen Folie ersetzt werden.

### Beispiel:

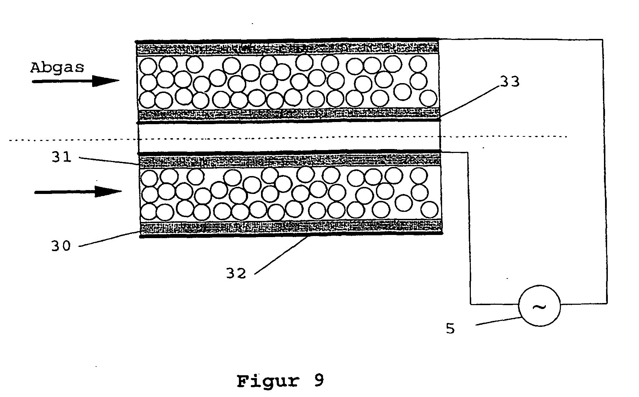

Figur 9 zeigt einen koaxialen Plasmareaktor. (30) bezeichnet ein Außenrohr und (31) ein Innenrohr aus Quarzglas. Die Innenfläche des Innenrohres und die Außenfläche des Außenrohres sind mit metallischen Elektroden (33) und (32) belegt. Durch Anlegen einer Entladungsspannung an diese Elektroden kann im ringförmigen Zwischenraum zwischen Innenrohr und Außenrohr eine dielektrische Barriereentladung gezündet werden.

Dieser Reaktor wurde für die folgenden Untersuchungen eingesetzt. Außen- und Innenrohr bestanden aus 2 mm dickem Quarzglas. Das Außenrohr hatte einen Außendurchmesser von 4 und das Innenrohr einen Innendurchmesser von 2,6 cm. Die Länge des Reaktors betrug 20 und die Länge der Elektroden 16 cm. Die Entladung wurde mit einer Frequenz von 1 kHz betrieben. Die Messungen wurden bei Raumtemperatur durchgeführt.

Durch den Reaktor wurde die in der Tabelle 1 angegebene Synthesegasmischung geführt. Infolge des Wassergehalts der Gasmischung wurde das zugeführte NO vor Eintritt in den Plasmareaktor bis zum chemischen Gleichgewicht aufoxidiert.

**Tabelle 1:**

| Zusammensetzung der Synthesegasmischung | | |
|---|---|---|
| Stoff | Volumenstrom [Nl] | Konzentration [Vol.-%] bei T = 293 K |
| N₂ | 1,0 | 78 |
| O₂ | 0,2 | 19 |
| H₂O | 26,0·10-3 | 2,6 |
| NO | 1,2·10-3 | 1000 Vol.-ppm |
| Summe | 1,2 | 100 |

Zur Identifizierung der in der Gasmischung enthaltenen Spezies wurde die Absorption der Gasmischung im Bereich zwischen 200 und 400 nm mit einem UV-VIS-Spektrometer gemessen.

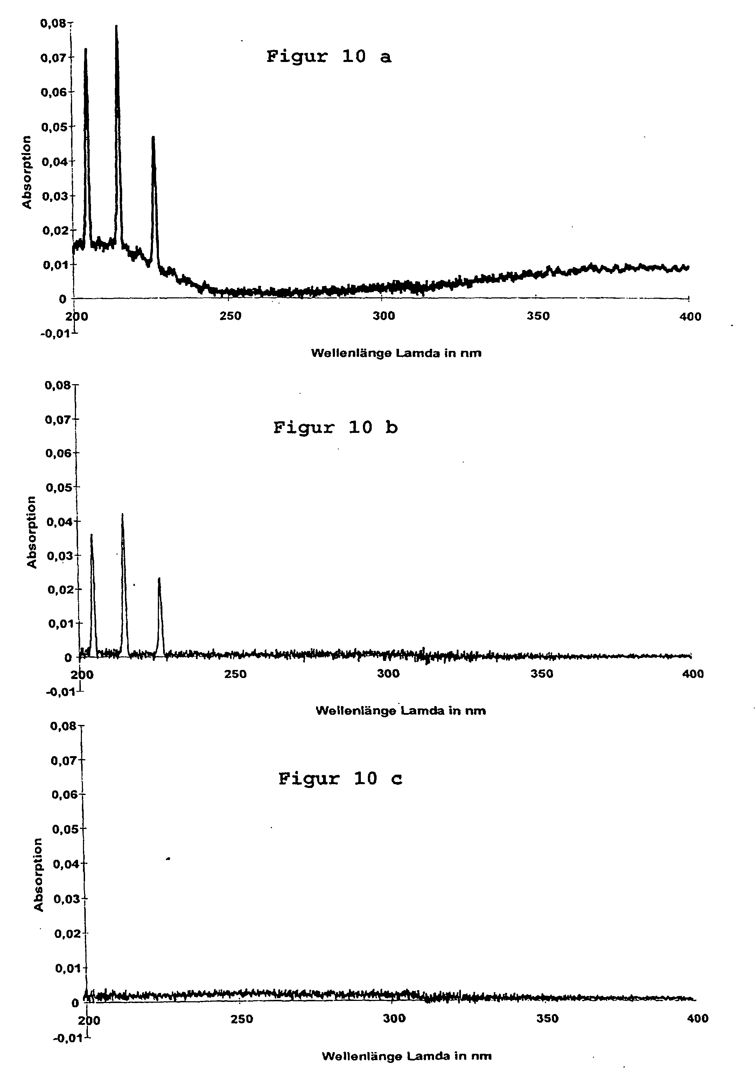

Figur 10a zeigt das Spektrum der unbehandelten Gasmischung so wie sie in den Reaktor geleitet wurde. Dieses Spektrum zeigt die charakteristischen Absorptionsbanden und -linien von NO, HNO₃ und NO₂. Das Vorhandensein von NO ist an den drei scharfen Absorptionslinie unterhalb von 230 nm zu erkennen. Diesen Absorptionslinien überlagert ist eine breite Absorptionsbande zwischen 200 und etwa 250 nm, die der Salpetersäure zugeordnet werden kann. Oberhalb von 300 nm ist eine weitere, sehr breite Absorptionsbande zu erkennen, die von NO₂ verursacht wird.

Figur 10b zeigt das Spektrum der Gasmischung nach Durchlaufen des mit Aluminiumoxidpellets gefüllten Reaktors ohne eingeschaltete Gasentladung. Die Pellets enthielten Bariumoxid in einer Konzentration von 5 Gew.-%, bezogen auf das Gesamtgewicht der Pellets. Die Durchmesser der Pellets lagen im Bereich zwischen 1,5 und 2 mm. Das Spektrum von Figur 10b zeigt, daß die mit Bariumoxid dotierten Pellets sowohl NO₂ als auch HNO₃ quantitativ absorbieren.

Figur 10c zeigt das Absorptionsspektrum der Gasmischung hinter dem Reaktor bei eingeschalteter Gasentladung. Im Rahmen der Meßgenauigkeit sind keine oxidierten Stickstoffspezies mehr zu erkennen. Das in der Synthesegasmischung enthaltene Stickoxid wurde also durch die Gasentladung zu NO₂ oxidiert und sofort von den mit Bariumoxid dotierten Pellets absorbiert.

## Patentansprüche

1. Verfahren zur Verminderung des Stickoxidgehaltes der Abgase eines Verbrennungsmotors durch Speichern der Stickoxide an einem Stickoxidspeichermaterial während Betriebsphasen des Motors mit überstöchiometrischem Luft/Kraftstoffverhältnis in Form von Nitraten (Speicherphase), Zersetzen der Nitrate zu Stickoxiden während kurzzeitiger Betriebshasen mit unterstöchiometrischem Luft/Kraftstoffverhältnis (Desorptionsphase) und Reduktion der freigesetzten Stickoxide,
**dadurch gekennzeichnet,**
**daß** die Abgase zumindest während der Speicherphase in einer elektrischen Gasentladung behandelt und das gebildete Stickstoffdioxid und die gebildete Salpetersäure am Stickoxidspeichermaterial gespeichert werden.

2. Verfahren nach Anspruch 1,
**dadurch gekennzeichnet,**
**daß** die Abgase nach der Behandlung in der Gasentladung über das Stickoxidspeichermaterial und anschließend über einen Abgaskatalysator geführt werden.

3. Verfahren nach Anspruch 2,
**dadurch gekennzeichnet,**
**daß** sich in der Gasentladung inerte Füllkörper befinden.

4. Verfahren nach Anspruch 1,
**dadurch gekennzeichnet,**
**daß** die Abgase nach der Behandlung in der Gasentladung über das Stickoxidspeichermaterial geführt werden, welches zusätzlich als katalytisch aktive Komponenten wenigstens ein Metall aus der Platingruppe oder der ersten Reihe der Übergangsmetalle des periodischen Systems der Elemente enthält.

5. Verfahren nach Anspruch 4,
**dadurch gekennzeichnet,**
**daß** sich in der Gasentladung inerte Füllkörper befinden.

6. Verfahren nach Anspruch 1,
**dadurch gekennzeichnet,**
**daß** das Stickoxidspeichermaterial in der Gasentladung angeordnet ist.

7. Verfahren nach Anspruch 6,
**dadurch gekennzeichnet,**
**daß** die Abgase nach Verlassen der Gasentladung über einen Abgaskatalysator geführt werden.

8. Verfahren nach Anspruch 6,
**dadurch gekennzeichnet,**
**daß** das Stickoxidspeichermaterial zusätzlich als katalytisch aktive Komponenten wenigstens ein Metall aus der Platingruppe oder der ersten Reihe der Übergangsmetalle des periodischen Systems der Elemente enthält.

9. Verfahren nach Anspruch 6,
**dadurch gekennzeichnet,**
**daß** das Stickoxidspeichermaterial in Form einer Pelletschüttung in der elektrischen Gasentladung angeordnet ist.

10. Verfahren nach Anspruch 6,
**dadurch gekennzeichnet,**
**daß** das Stickoxidspeichermaterial in Form einer Beschichtung auf den Wänden der Strömungskanäle eines Wabenkörpers aufgebracht ist und die Gasentladung durch die Strömungskanäle hindurchgeführt wird.

11. Verfahren nach Anspruch 6,
**dadurch gekennzeichnet,**
**daß** das Stickoxidspeichermaterial in Form einer Beschichtung auf den Wänden der Strömungskanäle eines Wabenkörpers aufgebracht ist und die Gasentladung transversal zur Strömung des Abgases betrieben wird.

12. Verfahren nach Anspruch 11,
**dadurch gekennzeichnet,**
**daß** zwischen den Wänden des Wabenkörpers und dem Stickoxidspeichermaterial eine dielektrische Zwischenschicht angeordnet ist.

13. Verfahren nach einem der vorstehenden Ansprüche,
**dadurch gekennzeichnet,**
**daß** die Gasentladung kontinuierlich während der Speicher- und Desorptionsphase betrieben wird.

14. Verfahren nach Anspruch 13,
**dadurch gekennzeichnet,**
**daß** es sich bei der Gasentladung um eine dielektrische Barriere-Entladung handelt, welche mit einer Frequenz zwischen 50 Hz und 250 kHz betrieben wird.

15. Verfahren nach Anspruch 13,
**dadurch gekennzeichnet,**
**daß** dem Stickoxidspeichermaterial ein Startkatalysator und/oder ein Kohlenwasserstoffadsorber vorgeschaltet ist.

## Claims

1. A process for reducing the nitrogen oxides content of the exhaust gas from an internal combustion engine by storing the nitrogen oxides in the form of nitrates on a nitrogen oxides storage material during phases when the engine operates with a greater than stoichiometric air/fuel ratio (storage phase), decomposing the nitrates to give nitrogen oxides during brief phases when the engine operates with a less than stoichiometric air/fuel ratio (desorption phase) and reducing the nitrogen oxides which are released,
**characterised in that**
the exhaust gas is treated in an electric gas discharge at least during the storage phase and the nitrogen dioxide formed and the nitric acid formed are stored on the nitrogen oxides storage material.

2. The process according to Claim 1,
**characterised in that**
the exhaust gas, after treatment in the gas discharge, is passed over the nitrogen oxides storage material and then over an exhaust gas catalyst.

3. The process according to Claim 2,
**characterised in that**
inert packing objects are placed within the gas discharge.

4. The process according to Claim 1,
**characterised in that**
the exhaust gas, after treatment in the gas discharge, is passed over the nitrogen oxides storage material which further comprises at least one metal from the platinum group or the first series of transition metals in the periodic system of elements as a catalytically active component.

5. The process according to Claim 4,
**characterised in that**
inert packing objects are placed within the gas discharge.

6. The process according to Claim 1,
**characterised in that**
the nitrogen oxides storage material is located within the gas discharge.

7. The process according to Claim 6,
**characterised in that**
the exhaust gases are passed over an exhaust gas catalyst after leaving the gas discharge.

8. The process according to Claim 6,
**characterised in that**
the nitrogen oxides storage material further comprises at least one metal from the platinum group or the first series of transition metals in the periodic system of elements as a catalytically active component.

9. The process according to Claim 6,
**characterised in that**
the nitrogen oxides storage material is located in the electric gas discharge in the form of a bed of pellets.

10. The process according to Claim 6,
**characterised in that**
the nitrogen oxides storage material is applied in the form of a coating to the walls of the flow channels of a honeycomb structure and the gas discharge is passed along the flow channels.

11. The process according to Claim 6,
**characterised in that**
the nitrogen oxides storage material is applied in the form of a coating to the walls of the flow channels of a honeycomb structure and the gas discharge is applied transversally to the flow of the exhaust gas.

12. The process according to Claim 11,
**characterised in that**
a dielectric intermediate layer is arranged between the walls of the honeycomb structure and the nitrogen oxides storage material.

13. The process according to one of the preceding Claims,
**characterised in that**
the gas discharge is operated continuously during the storage and desorption phases.

14. The process according to Claim 13,
**characterised in that**
the gas discharge is a dielectric barrier discharge which is operated at a frequency between 50 Hz and 250 kHz.

15. The process according to Claim 13
**characterised in that**
a starter catalyst and/or a hydrocarbon adsorber is inserted upstream of the nitrogen oxides storage material.

## Revendications

1. Procédé pour diminuer le taux d'oxydes d'azote dans des gaz d'échappement d'un moteur à combustion, par accumulation des oxydes d'azote sur un matériau d'accumulation d'oxydes d'azote pendant des phases de fonctionnement du moteur avec rapport air/carburant surstoechiométrique sous forme de nitrates (phase d'accumulation), décomposition des nitrates en oxydes d'azote pendant des phases de fonctionnement de courte durée avec rapport air/carburant sous-stoechiométrique (phase de désorption), et réduction des oxydes d'azote libérés,
**caractérisé en ce que**
les gaz d'échappement sont traités, tout au moins pendant la phase d'accumulation, dans une décharge gazeuse électrique, et le dioxyde d'azote formé et l'acide nitrique formé sont accumulés sur le matériau d'accumulation d'oxydes d'azote.

2. Procédé selon la revendication 1,
**caractérisé en ce que**
les gaz d'échappement, après le traitement dans la décharge gazeuse, sont guidés à travers le matériau d'accumulation d'oxydes d'azote puis à travers un catalyseur de gaz d'échappement.

3. Procédé selon la revendication 2,
**caractérisé en ce que**
des corps de remplissage inerte se trouvent dans la décharge gazeuse.

4. Procédé selon la revendication 1,
**caractérisé en ce que**
les gaz d'échappement, après le traitement dans la décharge gazeuse, sont guidés à travers le matériau d'accumulation d'oxydes d'azote qui contient en plus, en tant que composants catalytiquement actifs, au moins un métal du groupe du platine ou de la première série des métaux de transition de la classification périodique des éléments.

5. Procédé selon la revendication 4,
**caractérisé en ce que**
des corps de remplissage inerte se trouvent dans la décharge gazeuse.

6. Procédé selon la revendication 1,
**caractérisé en ce que**
le matériau d'accumulation d'oxydes d'azote est disposé dans la décharge gazeuse.

7. Procédé selon la revendication 6,
**caractérisé en ce que**
les gaz d'échappement, après avoir quitté la décharge gazeuse, sont guidés à travers un catalyseur de gaz d'échappement.

8. Procédé selon la revendication 6,
**caractérisé en ce que**
le matériau d'accumulation d'oxydes d'azote contient en plus, en tant que composants catalytiquement actifs, au moins un métal du groupe du platine ou de la première série des métaux de transition de la classification périodique des éléments.

9. Procédé selon la revendication 6,
**caractérisé en ce que**
le matériau d'accumulation d'oxydes d'azote est disposé, sous forme d'un tas de granulés dans la décharge gazeuse.

10. Procédé selon la revendication 6,
**caractérisé en ce que**
le matériau d'accumulation d'oxydes d'azote est appliqué sous forme d'un revêtement sur les parois des canaux d'écoulement d'un corps alvéolaire et la décharge gazeuse est guidé à travers les canaux d'écoulement.

11. Procédé selon la revendication 6,
**caractérisé en ce que**
le matériau d'accumulation d'oxydes d'azote est appliqué sous forme d'un revêtement sur les parois des canaux d'écoulement d'un corps alvéolaire et la décharge gazeuse fonctionne transversalement par rapport à l'écoulement des gaz d'échappement.

12. Procédé selon la revendication 11,
**caractérisé en ce qu'**
une couche intermédiaire diélectrique est disposée entre les parois du corps alvéolaire et le matériau d'accumulation d'oxydes d'azote.

13. Procédé selon l'une quelconque des revendications précédentes,
**caractérisé en ce que**
la décharge gazeuse fonctionne en continu pendant la phase d'accumulation et de désorption.

14. Procédé selon la revendication 13,
**caractérisé en ce que**
la décharge gazeuse est une décharge à barrière diélectrique qui fonctionne à une fréquence entre 50 Hz et 250 kHz.

15. Procédé selon la revendication 13,
**caractérisé en ce qu'**
un catalyseur de démarrage et/ou un adsorbeur d'hydrocarbures est monté en amont du matériau d'accumulation d'oxydes d'azote.
